# FASCICULE DE BREVET EUROPEEN

(11) **EP 3 224 923 B1**
(45) Date de publication et mention de la délivrance du brevet: **09.09.2020**
(21) Numéro de dépôt: 15808692.6
(22) Date de dépôt: 26.10.2015
(51) Int. Cl.: H02J 7/00, H02J 1/08, B60L 50/00, B60L 58/00

(54) **PACK DE BATTERIES POUR UN VEHICULE AUTOMOBILE**
BATTERIEPACK FÜR EIN KRAFTFAHRZEUG
BATTERY PACK FOR AN AUTOMOTIVE VEHICLE

(30) Priorité: 25.11.2014 FR 1461403
(43) Date de publication de la demande: 04.10.2017
(73) Titulaire: Renault S.A.S., 92100 Boulogne-Billancourt (FR)
(72) Inventeur: NEUSSER, Ariane, 78000 Versailles (FR); LOUDOT, Serge, 91190 Villiers Le Bacle (FR); HIRON, Christian, 78690 Les Essarts Le Roi (FR)
(86) Numéro de dépôt international: PCT/FR2015/052877
(87) Numéro de publication internationale: WO 2016/083690

(56) Documents cités:
- EP-A2- 2 587 618
- WO-A2-2004/049540
- DE-A1-102011 006 761
- FR-A1- 2 915 328
- FR-A1- 3 003 827
- US-A- 6 150 795

## Description

La présente invention concerne un dispositif d'alimentation d'un réseau de bord d'un véhicule automobile électrique ou hybride.

Un véhicule électrique est équipé, comme pour un véhicule à motorisation thermique ou hybride, d'une batterie secondaire de faible tension, par exemple 14V, destinée au démarrage du véhicule et à des fonctions de sécurité telles que les feux de détresse ou de confort telles que l'éclairage intérieur ou le multimédia. Généralement, il s'agit d'une batterie au plomb. La charge de cette batterie secondaire s'effectue par l'intermédiaire d'un convertisseur DC/DC qui transfère l'énergie de la batterie principale Li-ion haute tension destinée à la traction. Afin d'assurer sa fonction et d'éviter sa dégradation, notamment par sulfatation, l'état de charge doit toujours être maintenu au-dessus de 70% de la charge maximale. De ce fait, une batterie au plomb ne dispose que d'une portion limitée de sa puissance totale réellement utilisable. Prenons l'exemple d'une batterie au plomb standard de 500 Wh (taille « L1 »). Une énergie de seulement 150 Wh (30% de 500 Wh) peut être réellement utilisée. La masse totale d'une telle batterie est d'environ 13 kg. Sur cette masse totale, une masse de 9 kg qui contient la portion de 70% d'énergie inutilisée doit néanmoins être déplacée par le véhicule dans le seul but de préserver la durée de vie de la batterie et de garantir la production d'une puissance optimale. En outre, une telle batterie se présente généralement sous la forme d'un boîtier parallélépipédique volumineux et difficile à installer. Il est également difficile de déterminer facilement, à un instant donné, l'état de santé et l'état de charge de ce type de batterie. Enfin, une batterie au plomb doit en moyenne être remplacée après quelques années d'utilisation pour éviter toute défaillance. Il est également connu de l'état de la technique décrite par le document FR3003827 qu'une batterie peut être composée de cellules et les cellules peuvent être séparées en 2 ensembles distincts, chaque ensemble ayant un ou des convertisseurs pour alimenter des parties distinctes du véhicule.

La présente invention vient améliorer la situation.

A cet effet, l'invention concerne un pack batterie pour un véhicule automobile équipé d'un moteur de traction électrique et d'un réseau de bord électrique, comportant un ensemble de cellules, caractérisé en ce que ledit ensemble de cellules comprend un premier groupe de cellules destiné à alimenter le moteur électrique et un deuxième groupe d'au moins une cellule distincte de celles du premier groupe, destiné à alimenter le réseau de bord du véhicule.

Grâce à l'invention, la batterie au plomb peut être supprimée. L'alimentation du réseau de bord est assurée par une ou plusieurs des cellules dédiées du deuxième groupe, prélevées du pack batterie de cellules ou accumulateurs destiné à alimenter le moteur électrique de traction.

Avantageusement, le deuxième groupe est adapté pour alimenter directement le réseau de bord du véhicule, c'est-à-dire qu'il délivre une tension d'alimentation adaptée au réseau de bord, sans convertisseur de tension intermédiaire.

Le deuxième groupe de cellules, dédiées au réseau de bord, dispose avantageusement d'une borne de connexion pour l'alimentation du réseau de bord.

Avantageusement encore, les deux groupes sont isolés électriquement l'un de l'autre en mode d'alimentation batterie. Plus précisément lorsque le premier groupe alimente le moteur électrique de traction par l'intermédiaire d'un onduleur de traction, alors que le deuxième groupe alimente le réseau de bord, les deux groupes agissent comme deux batteries distinctes électriquement.

Dans une première forme de réalisation, le deuxième groupe d'au moins une cellule est relié au premier groupe de cellules par l'intermédiaire d'un convertisseur de tension sécuritaire, le deuxième groupe d'au moins une cellule étant destiné à être rechargé par le premier groupe de cellules par l'intermédiaire du convertisseur.

Avantageusement, le convertisseur de tension est commandé pour faire recharger de façon interne au pack batterie, le deuxième groupe par le premier groupe lors d'une phase de stationnement ou lors d'une phase de roulage atypique lors de laquelle l'au moins une cellule du deuxième groupe se décharge plus rapidement que les cellules du premier groupe.

Dans une forme de réalisation particulière, le pack batterie comprend un premier relais à deux états, ouvert et fermé, interposé entre les deux groupes de cellules, et un système de commande destiné à fermer le premier relais pour connecter en série les deux groupes de cellules et recharger simultanément les deux groupes de cellules.

Avantageusement encore, le pack batterie comprend un deuxième relais à deux états, ouvert et fermé, par l'intermédiaire duquel, à l'état fermé, une borne du premier groupe de cellules est destinée à être reliée directement à la masse ; et le système de commande est destiné à ouvrir le premier relais et à fermer le deuxième relais, après une recharge simultanée des deux groupes de cellules, une fois que les cellules du premier groupe ont atteint un seuil de charge prédéfini, de manière à poursuivre la recharge seulement de la ou des cellules du premier groupe.

L'invention concerne également un équipement pour véhicule automobile ou hybride comportant le pack batterie tel que précédemment défini, caractérisé en ce qu'il comprend un chargeur double sortie, ayant une sortie reliée au premier groupe de cellules et une autre sortie reliée au deuxième groupe d'au moins une cellule.

Avantageusement, les puissances des deux sorties du chargeur double sortie sont dimensionnées en fonction des énergies stockées respectivement dans les deux groupes de cellules pour que les temps de charge des deux groupes soient sensiblement égaux à 5% près. Il est à noter qu'un calculateur de pack batterie comporte de nombreux capteurs aptes à connaître à tout instant l'état de chaque groupe de cellules du pack batterie. Le temps de charge de chaque groupe de cellules est donc estimable en fonction de la puissance en sortie du chargeur. L'harmonisation des temps de charge des deux groupes de cellules du pack batterie selon l'invention est donc préférentiellement conçue de façon logicielle sans ajout matériel.

Avantageusement encore, l'équipement comprend en outre un chargeur relié à une borne de recharge du premier groupe de cellules et à la masse, le deuxième groupe d'au moins une cellule ayant une borne reliée à la masse

L'invention concerne encore un véhicule automobile électrique ou hybride, disposant d'un moteur électrique et d'un réseau de bord, caractérisé en ce qu'il comporte un pack batterie tel que précédemment défini, ou un équipement tel que défini ci-dessus.

Avantageusement, le véhicule comprend un convertisseur de tension interposé entre le pack batterie et le réseau de bord du véhicule.

L'invention sera mieux comprise à l'aide de la description suivante de plusieurs formes de réalisation de la batterie de l'invention, en référence aux dessins annexés sur lesquels :
- La figure 1 représente un schéma de l'architecture de la batterie selon une première forme de réalisation de l'invention ;
- La figure 2 représente un schéma de l'architecture de la batterie selon une deuxième forme de réalisation de l'invention ;
- La figure 3 représente un schéma d'une variante de réalisation de la figure 2 ;
- La figure 4 représente un schéma d'une autre variante de réalisation de la figure 2 ;

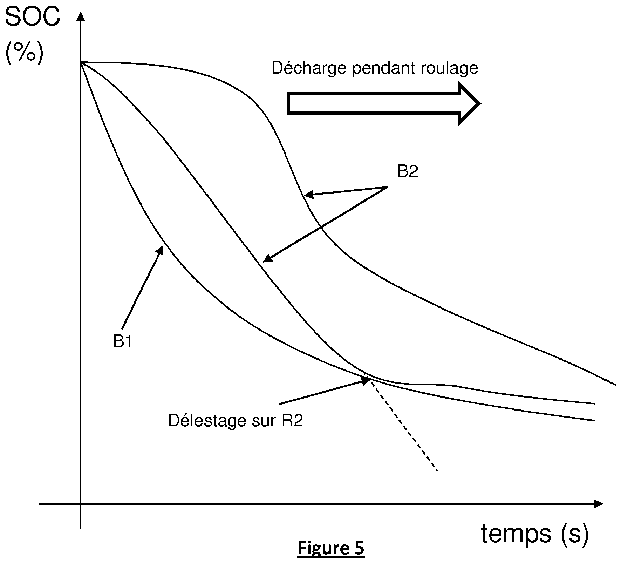

- La figure 5 représente les profils de décharge d'une batterie de traction et d'une batterie de réseau de bord, telles que réalisées selon l'invention, pendant une phase de roulage ;
- La figure 6 représente les profils de recharge d'une batterie de traction et d'une batterie de réseau de bord, telles que réalisées selon l'invention ;
- La figure 7 représente un profil de décharge nominal (le plus fréquent) d'une batterie de traction et d'une batterie de réseau de bord, telles que réalisées selon l'invention ;
- La figure 8 représente un profil de décharge exceptionnel d'une batterie de traction et d'une batterie de réseau de bord, telles que réalisées selon l'invention, avec contribution d'un convertisseur de tension et/ou d'un délestage du réseau de bord.

D'emblée, on notera que sur les différentes figures, les éléments identiques ou correspondants portent les mêmes références, sauf indication spécifique contraire.

L'invention concerne un pack batterie, ou bloc batterie, de l'anglais « battery pack », pour un véhicule automobile ou hybride disposant d'un moteur électrique de traction et d'un réseau de bord auquel sont reliés divers équipements tels que des calculateurs, des équipements multimédia, divers actionneurs électriques (essuyage, lève-vitres, etc...), des sources d'éclairage, un autoradio, etc.. Le moteur électrique de traction nécessite une première alimentation, haute tension, tandis que le réseau de bord nécessite une deuxième alimentation distincte de la première, généralement basse ou moyenne tension. Dans l'exemple particulier décrit ici, la première alimentation délivre une tension de 400 V et la deuxième une alimentation de 12 V.

Le pack batterie est destiné à assurer l'alimentation électrique du moteur électrique de traction ainsi que celle du réseau de bord du véhicule. Il comprend un ensemble E d'un nombre N (avec N>1) de cellules C₁, C₂, ..., C_{N}, ou accumulateurs, par exemple des cellules lithium-ion (Li-ion). Les cellules forment un bloc. Elles sont logées dans un même boîtier ou carter. Dans l'exemple de réalisation décrit ici, la tension aux bornes de chaque cellule est comprise entre 2,5V et 4V lorsque la cellule est chargée à 100%.

Selon l'invention, l'ensemble de cellules E du pack batterie est divisé en deux groupes :
- un premier groupe G1 contenant une pluralité N1 de cellules ;
- un deuxième groupe G2 contenant un nombre N2 de cellule(s), avec 1 ≤ *N2 < N*1*.*

Le premier groupe G1 est destiné à assurer l'alimentation électrique haute tension du moteur électrique. Plus précisément, il est destiné à alimenter un premier réseau haute tension, noté R1, auquel le moteur électrique de traction est connecté via un onduleur. Dans l'exemple particulier de réalisation décrit ici, le groupe G1 comprend ici N-3 cellules, en l'espèce les cellules C₁ à C_{N-3}. Les cellules C₁ à C_{N-3} sont ici connectées en série. Le groupe de cellules G1 dispose de deux bornes de sortie 1A, 1B qui sont respectivement connectées aux deux cellules d'extrémité C1 et C_{N-3}. Les deux bornes 1A, 1B fournissent respectivement une tension entre +HT et -HT (ici 400V) au réseau R1.

Le deuxième groupe G2 est destiné à alimenter le réseau de bord, noté R2, en fournissant une tension d'alimentation adaptée. En l'espèce, le groupe de cellules G2 alimente directement le réseau de bord R2, sans convertisseur de tension intermédiaire. Il délivre donc une tension de 12V. Les cellules du groupe G2 sont dédiées spécifiquement à l'alimentation du réseau de bord R2. Dans l'exemple particulier de réalisation décrit ici, le groupe G2 comprend trois cellules C_{N-2}, C_{N-1}, C_{N}. Ces trois cellules sont ici connectées en série. Le groupe G2 dispose de deux bornes de sortie 2A, 2B, respectivement connectées aux deux cellules d'extrémité C_{N-2} et C_{N}. La borne 2A fournit ici directement une tension d'alimentation de 14V. La borne 2B est ici reliée à la masse.

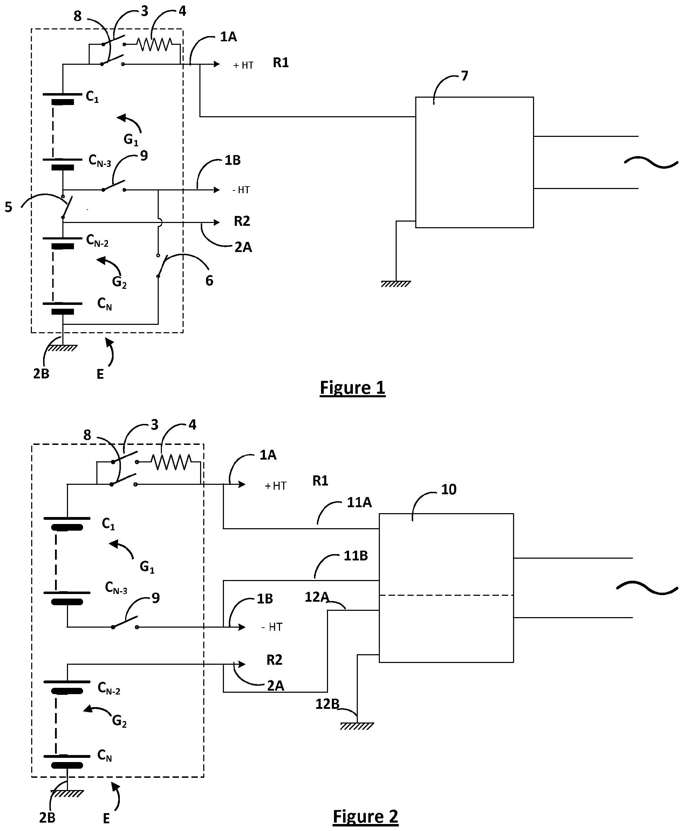

Dans une première forme de réalisation, représentée sur la figure 1, les deux groupes de cellules G1, G2 sont reliés l'un à l'autre par l'intermédiaire d'un premier relais 5 à deux états, ouvert et fermé. En outre, un deuxième relais 6 à deux états, ouvert et fermé, est monté entre la borne de sortie 1B du premier groupe G1 et la masse, en parallèle du groupe de cellules G2. Ainsi, la borne de sortie 1B est apte à être reliée à la masse par l'intermédiaire du relais 6.

Le relais 5 est interposé entre la cellule d'extrémité C_{N-3} du premier groupe G1 et la cellule d'extrémité C_{N-2} du deuxième groupe G2. Autrement dit les cellules d'extrémité C_{N-3} et C_{N-2} sont reliées en série par l'intermédiaire du relais 5 lorsque celui-ci est fermé. Lorsque le relais 5 est ouvert, les deux groupes de cellules G1, G2 sont isolés électriquement l'un de l'autre. Lorsque le relais 5 est fermé, toutes les cellules C₁ à C_{N} des deux groupes G1, G2 sont reliées en série.

Lorsque le relais 5 est ouvert, les cellules du premier groupe G1 et celles du deuxième groupe G2 sont destinées à assurer l'alimentation en tension du moteur électrique de traction et celle du réseau de bord, respectivement. Autrement dit, les deux groupes de cellules G1, G2 fonctionnent alors en mode d'alimentation. En définitive, les deux groupes de cellules G1, G2 constituent deux batteries d'alimentation distinctes B1, B2 qui se déchargent indépendamment l'une de l'autre au gré de la puissance qui est demandée par la traction d'une part, et par le réseau 14V d'autre part.

Lorsque le relais 5 est fermé, les cellules C₁ à C_{N} sont destinées à être rechargées simultanément par un chargeur 7, en mode de recharge simultanée.

Le deuxième relais 6, lorsqu'il est fermé, est destiné à permettre une recharge des seules cellules du premier groupe G1.

Par ailleurs, de façon classique, les deux bornes 1A (+HT) et 1B (-HT) du premier groupe de cellules G1 sont reliées aux cellules C₁ et C_{N-3} par l'intermédiaire de deux interrupteurs 8, 9 respectifs, destinés à isoler le premier groupe G1 de cellules du reste du véhicule (arrêté en stationnement par exemple) pour des raisons de sécurité.

En outre, de façon également connue, une résistance de pré-charge 4 et un interrupteur 3, couplés en série, sont montés en parallèle de l'interrupteur 8. Lorsque l'on souhaite appliquer la haute tension de 400V au réseau haute tension R1, la résistance de pré-charge 4 permet de limiter le courant afin de recharger des condensateurs (non représentés sur le schéma) du réseau R1, connectés en aval des bornes de sortie 1A, 1B et préalablement déchargés.

Un système de gestion de batterie, appelé « BMS » (de l'anglais « Battery Management System »), est agencé pour surveiller l'état de charge des cellules du pack batterie et pour contrôler son fonctionnement. Le système BMS est un système de commande, notamment destiné à commander l'ouverture et la fermeture des différents relais et/ou interrupteurs, comme explicité dans la description du fonctionnement qui suit.

On va maintenant décrire le fonctionnement du pack batterie en phase d'alimentation et en phase de recharge.

En phase (ou mode) de roulage, le pack batterie alimente en tension les deux réseaux R1 (réseau haute tension) et R2 (réseau de bord). Les interrupteurs 8 et 9 sont fermés, et les relais 5 et 6 sont ouverts. Ainsi, les cellules du deuxième groupe G2 sont ainsi isolées électriquement des cellules du premier groupe G1. En définitive, le groupe G1 et le groupe G2 forment deux batteries distinctes B1, B2.

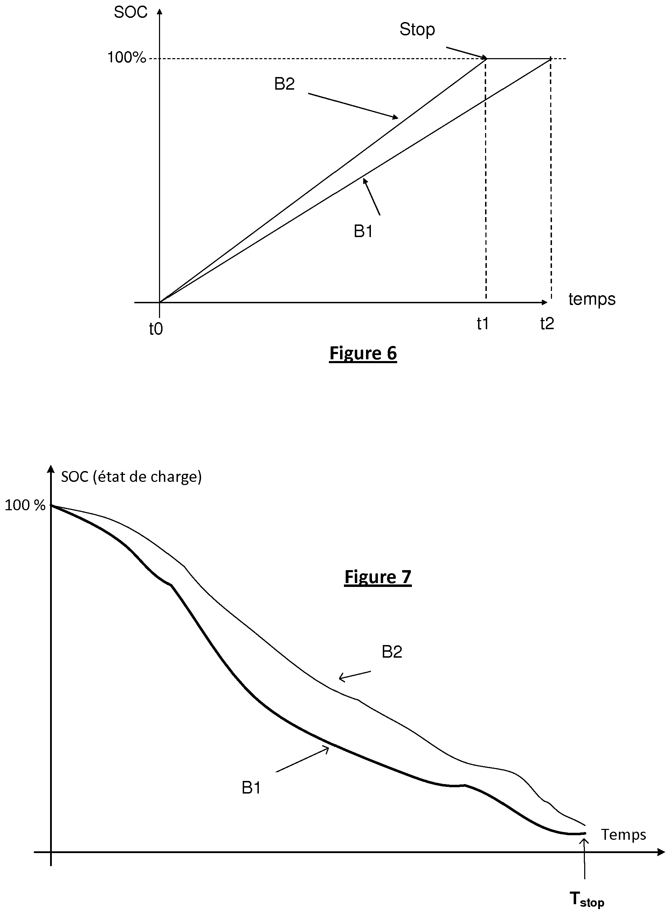

Sur la figure 7, on a représenté l'évolution des états de charge respectifs de la batterie B1 et de la batterie B2, dans le cas d'un fonctionnement nominal, en cours de roulage du véhicule. En d'autres termes, la figure 7 représente les profils de décharge respectifs des batteries B1 et B2, en fonctionnement nominal en cours de roulage du véhicule. Les deux batteries B1 et B2 ont des profils de décharge similaires. Lorsque l'état de charge de chacune des batteries B1 et B2 atteint un seuil bas, par exemple de l'ordre de 5% de son état de charge maximal, la batterie B1 doit être rechargée. La batterie B2 étant dédiée à l'alimentation des servitudes sous 14V, elle est dimensionnée pour que son état de charge soit supérieur à celui de la batterie B1 de traction lors d'un roulage « conventionnel », c'est-à-dire un profil de roulage qui couvre statistiquement au moins 95% des usages courants. De fait, les deux batteries B1 et B2 doivent être rechargées sensiblement au même instant Tₛₜₒₚ

En phase (ou mode) de recharge des cellules des deux groupes G1 et G2 (c'est-à-dire des batteries B1 et B2), le relais 5 est fermé, afin de mettre en série toutes les cellules C₁ à C_{N}. Les interrupteurs 8 et 6 sont fermés, tandis que les interrupteurs 9 et 3 sont ouverts. La borne de sortie 1A du groupe de cellules G1 est connectée à une sortie du chargeur 7. Une autre sortie du chargeur 7 est reliée à la masse ou connectée directement par un câble avec une mise à la masse en un point unique. En entrée, le chargeur 7 est connecté à une borne externe d'alimentation électrique, dans le cas d'un véhicule électrique, ou dans le cas d'un véhicule hybride rechargeable.

La figure 6 représente les profils de charge respectifs des batteries B1 et B2. Dans un premier temps, à partir d'un instant initial t₀, toutes les cellules C₁ à C_{N} sont rechargées simultanément. Dans le cas nominal, les cellules du groupe G2 disposent d'un état de charge supérieur à celui des cellules du groupe G1. Par conséquent, le groupe de cellules G2 (c'est-à-dire la batterie B2) atteint un état de charge maximal ici de 100% à un instant t₁, alors que les cellules du groupe G1 n'ont pas encore atteint leur état de charge maximal. A cet instant t₁, la batterie B2 est chargée à 100%, alors que la batterie B1 est chargée à x%, avec x<100, par exemple de l'ordre de 75%. A l'instant t₁, autrement dit une fois les cellules dédiées au réseau de bord R2 chargées, le chargeur 7 est arrêté, le relais 5 est ouvert ainsi que le relais 6, le relais 9 est fermé. Ainsi, seules les cellules du groupe G1, dédiées au réseau haute tension R1, sont connectées en sortie du chargeur 7. Le chargeur 7 est alors redémarré. Notons que la durée de l'interruption du chargeur 7 est suffisamment faible (de l'ordre d'une seconde) pour être négligeable sur le temps de charge. Après redémarrage du chargeur 7, la recharge reprend mais seulement pour les cellules du premier groupe G1. La recharge est arrêtée à un instant t₂, lorsque l'état de charge du groupe de cellules G1, autrement dit de la batterie B1, a atteint son état de charge maximal de 100%.

Ainsi, dans le cas nominal, la recharge des cellules C₁ à C_{N} s'effectue en deux temps : dans un premier temps, toutes les cellules C₁ à C_{N} sont rechargées simultanément, puis, une fois que les cellules dédiées au réseau de bord R2 ont atteint leur état de charge maximal, la recharge se poursuit seulement pour les cellules dédiées au réseau haute tension R1.

L'invention concerne aussi un équipement comportant le pack batterie de la figure 1 et le chargeur 7.

La figure 2 représente une deuxième forme de réalisation de l'invention. Par souci de clarté, seuls les éléments de cette deuxième forme de réalisation qui diffèrent de la première forme de réalisation de la figure 1 vont être décrits ci-après.

Un chargeur à double sortie 10 est utilisé à la place d'un chargeur classique tel que celui de la figure 1. Le chargeur double sortie 10 comporte une première sortie à deux bornes 11A, 11B et une deuxième sortie à deux bornes 12A, 12B. Les bornes 1A, 1B du groupe de cellules G1 sont connectées aux bornes 11A, 11B du chargeur 10. La borne 2A du groupe de cellules G2 est connectée à la borne 12A du chargeur 10. La borne 12B est reliée à la masse, ou reliée par câble à la borne 2B, celui-ci étant mis à la masse en un point unique. La première sortie (11A, 11B) du chargeur 10 est dédiée à la recharge du groupe de cellules G1, autrement dit de la batterie B1. La deuxième sortie (12A, 12B) du chargeur 10 est dédiée à la recharge du groupe de cellules G2, autrement dit de la batterie B2. La puissance de chacune des deux sorties du chargeur 10 est dimensionnée en fonction de l'énergie stockée dans la batterie B1 ou B2 à recharger, de façon à ce que les durées de recharge respectives des deux batteries soient similaires, c'est-à-dire avec un courant similaire et de fait une puissance proportionnelle au nombre de cellules de chaque pack batterie. Les puissances des deux sorties du chargeur double sortie 10 sont dimensionnées pour que les temps de charge des deux groupes soient sensiblement égaux à 5% près. Avantageusement, le temps de charge du deuxième groupe est plus court que celui du premier groupe. Cette deuxième forme de réalisation ne dispose pas de relais 5, 6. Les cellules du groupe G1 sont isolées électriquement de celles du groupe G2.

L'invention concerne aussi un équipement comportant le pack batterie de la figure 2 et un chargeur double sortie 10.

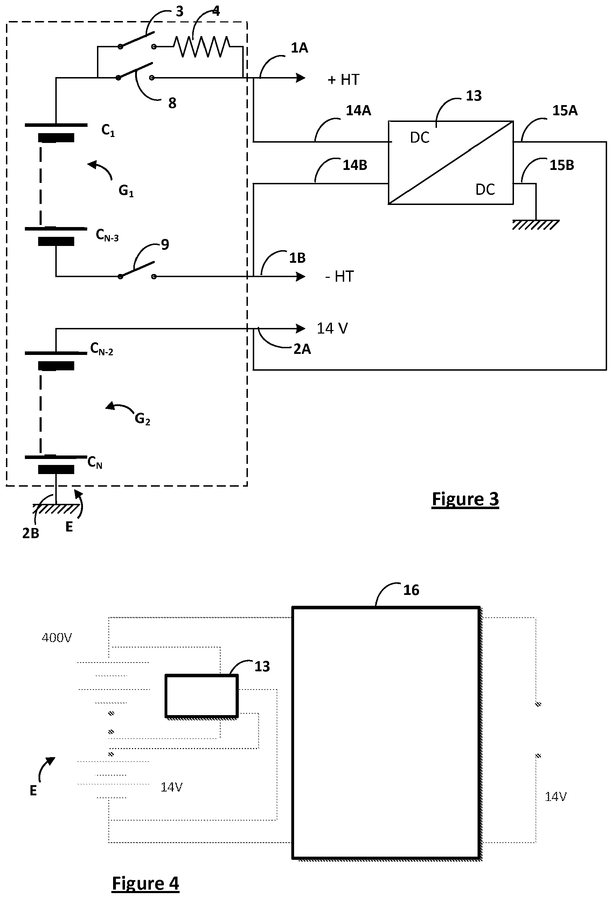

Dans une variante de réalisation, représentée sur la figure 3, le pack batterie intègre en outre un convertisseur de tension interne 13, en l'espèce un convertisseur DC/DC, interposé entre le groupe de cellules G1 et le groupe de cellules G2. Sur la figure 3, on a représenté un tel convertisseur 13 intégré dans le pack batterie de la figure 2. Il pourrait également être intégré dans une autre forme de réalisation du pack batterie, notamment dans le pack batterie de la figure 1. Le convertisseur 13 permet une recharge interne des cellules du deuxième groupe G2 par celles du premier groupe G1. Une recharge interne par l'intermédiaire du convertisseur 13 peut être réalisée dans différentes circonstances :
- lors d'une phase de stationnement et/ou
- lors d'une phase de roulage atypique (par exemple dans des embouteillages) lors de laquelle les cellules du deuxième groupe G2 se déchargent plus rapidement que celles du premier groupe G1.

Le convertisseur 13 comporte deux bornes d'entrée 14A, 14B et deux bornes de sortie 15A, 15B. Les deux bornes d'entrée 14A, 14B sont connectées aux bornes 1A, 1B du groupe de cellules G1. La borne de sortie 15A est connectée à la borne 2A du groupe de cellules G2. La borne de sortie 15B est reliée à la masse. Lors d'une recharge interne, les interrupteurs 8 et 9 sont fermés. Le convertisseur interne 13 permet d'assurer une redondance sécuritaire d'alimentation des équipements critiques du réseau de bord R2, notamment des calculateurs assurant des fonctions sécuritaires telles que le freinage ABS. Ce convertisseur interne peut être sous-dimensionné par rapport aux convertisseurs de l'art antérieur en ce sens qu'il n'est dimensionné que pour assurer la consommation électrique des éléments sécuritaires, tous les autres consommateurs de prestations de confort pouvant être délestés (c'est-à-dire arrêté). Sachant que cette situation est improbable : la batterie G2 est dimensionnée pour assurer l'immense majorité des missions sans avoir recours à un appoint d'énergie de la part de G1.

Un convertisseur interne analogue à celui de la figure 3 pourrait être intégré dans l'une quelconque des formes de réalisation du pack batterie de l'invention, notamment dans le pack batterie de la figure 1.

Dans une autre variante de réalisation, représentée sur la figure 4, un convertisseur de tension 16 additionnel est interposé entre, d'une part, l'ensemble de cellules E (cellules G1 et G2 en série) ou le groupe de cellules G1 et, d'autre part, le réseau de bord R2. Le convertisseur 16 est relié en entrée aux bornes de l'ensemble E de cellules C₁ à C_{N}, ou aux bornes 1A (+HT), 1B (-HT) du groupe de cellules G1, et en sortie à l'entrée du réseau de bord R2. Dans ce cas, le transfert n'est possible qu'avec les relais 8 et 9 fermés. Le convertisseur 16 est ici un convertisseur DC/DC destiné à convertir une tension d'entrée d'environ 400V en une tension de sortie de 12V. Il est destiné à assurer l'alimentation électrique du réseau de bord R2 notamment pour des raisons sécuritaires, par exemple en cas de défaillance ponctuelle du groupe G2 de cellules. Le convertisseur 16 est optionnel. Il peut être ajouté à l'une quelconque des formes de réalisation de l'invention. Il peut être intégré au pack batterie ou bien être externe à celui-ci. Ce convertisseur 16 peut être utilisé pour alimenter le réseau de bord R2, entre deux recharges, dans le cas où le groupe de cellules G2 s'est déchargé avant le groupe de cellules G1.

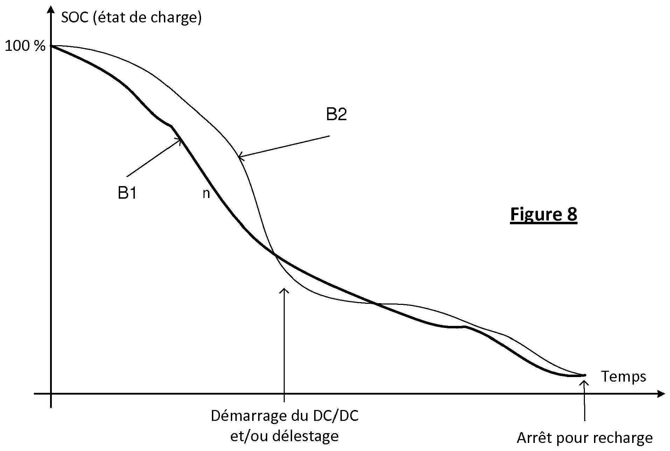

Sur la figure 8, on a représenté l'évolution de l'état de charge de la batterie B1 et celui de la batterie B2, dans le cas particulier où l'état de charge de la batterie B2 (c'est-à-dire des cellules du groupe G2) décroit plus rapidement que celui de la batterie B1 (c'est-à-dire des cellules du groupe G1). Dans ce cas particulier, deux options de gestion sont envisageables.

Une première option de gestion consiste, dans un premier temps, à compenser tout ou partie de la décharge de la batterie B2 en alimentant le réseau de bord R2 par l'intermédiaire du convertisseur additionnel 16 de la figure 4. Dans ce cas, les cellules du groupe G2 peuvent être soit rechargées par les cellules du groupe G1, par l'intermédiaire du convertisseur interne13, soit continuer à se décharger à un rythme similaire à celui des cellules du groupe G1. Si toutefois, malgré l'apport de puissance du convertisseur 16, la décharge des cellules du groupe G2 est encore trop rapide par rapport à celle des cellules du groupe G1 ou que le convertisseur 16 n'existe pas, on met en œuvre, dans un deuxième temps, une stratégie de délestage de charges ou équipements, notamment des charges non sécuritaires, du réseau de bord R2. Par exemple, la stratégie de délestage peut consister à arrêter de façon autoritaire des équipements de confort tels que des sièges chauffants, des éclairages, une prise d'allume cigare, etc..

Une deuxième option de gestion consiste à alimenter le réseau de bord R2 au moyen du groupe de cellules G1, par l'intermédiaire du convertisseur additionnel 16, tout en mettant en œuvre la stratégie de délestage dès le début.

Alternativement ou en plus de la première ou de la deuxième option, lorsque le véhicule est en stationnement, sans être en charge, le convertisseur interne 13 peut assurer un transfert d'énergie du groupe de cellules G1 au groupe de cellules G2, notamment si l'état de charge des cellules du groupe G2 est insuffisant, notamment en-dessous ou proche de celui du groupe de cellules G1.

L'invention présente de nombreux avantages :
- un gain de masse, la batterie au plomb de l'art antérieur pesant entre 13kg et 18kg étant remplacée par une batterie d'accumulateurs d'environ 9 kg (sachant que dans le cas d'une architecture conventionnelle cette masse est nécessairement présente puisque la batterie de traction contient l'énergie nécessaire au réseau 14V) ;
- le deuxième groupe de cellules G2 formant la batterie B2 a une capacité de l'ordre de 1 à 2 kWh, ce qui lui permet d'alimenter le réseau de bord tout en se déchargeant parallèlement aux cellules du groupe G1 formant la batterie de traction B1 ; cela est dû, d'une part, à la forte densité des cellules ici Li-ion et, d'autre part, à la meilleure aptitude au cyclage de la batterie B2 qui peut utiliser la majeure partie de son énergie stockée avant d'être rechargée ;
- une réduction importante de la puissance, ou dimensionnement, du convertisseur optionnel 16 permettant d'assurer un transfert d'énergie du groupe de cellules G1 au réseau de bord R2, en cas de besoin ponctuel, ce qui apporte également un gain de masse d'environ 2 kg et une réduction de coût ;
- la possibilité de diagnostiquer la batterie facilement et donc de prédire à chaque instant la disponibilité de l'alimentation, ce qui présente un intérêt significatif en termes de sureté de fonctionnement ;
- facilité d'implantation dans le véhicule ; car la batterie n'a pas à être changée en cours de vie et peut de ce fait être placée dans des volumes moins accessibles.
- gain en coût d'usage et de maintenance, le pack batterie de cellules n'ayant pas besoin d'être remplacé aussi souvent qu'une batterie au plomb ;
- la suppression d'un convertisseur DC/DC de forte puissance qui permettait dans l'art antérieur de recharger la batterie au plomb pour alimenter le réseau de bord en ponctionnant la batterie de traction ;
- la suppression d'un défaut d'isolement potentiel entre le réseau haute tension et le réseau basse tension dû à une défaillance du convertisseur DC/DC . En effet, en roulage le réseau de traction est isolé du châssis, ce qui autorise un défaut d'isolement sans conséquence sécuritaire et permet de continuer à fonctionner, ce qui améliore de fait la disponibilité. Toutefois, ce défaut doit être détecté et géré en mode dégradé de façon à faire réparer le défaut (interdiction de recharge, de redémarrage après arrêt, allumage de voyant orange au tableau de bord...).

On soulignera que le fait de dédier une ou plusieurs cellules du pack batterie pour l'alimentation du réseau de bord n'a pas d'impact significatif sur l'autonomie de la batterie de traction B1 (sachant que dans le cas d'une architecture conventionnelle cette masse est nécessairement présente puisque la batterie de traction contient l'énergie nécessaire au réseau 14V).

L'invention concerne également un véhicule automobile électrique ou hybride, disposant d'un moteur électrique et d'un réseau de bord, et équipé d'un pack batterie tel que précédemment décrit et/ou d'un équipement comportant un pack batterie et un chargeur associé. Le véhicule peut également comporter un convertisseur de tension tel que celui 16 de la figure 4, interposé entre le pack batterie et le réseau de bord (R2) du véhicule

Dans la description qui précède, le réseau de bord est alimenté par des cellules d'une batterie haute tension de 400V typiquement. En variante, on peut envisager une batterie de tension différente, par exemple de 48V (cette basse tension permet de maintenir le réseau de traction dans la limite d'une tension sécuritaire)

## Revendications

1. Pack batterie pour un véhicule automobile équipé d'un moteur de traction électrique et d'un réseau de bord électrique (R2), comportant un ensemble de cellules (C₁ à C_{N}), ledit ensemble de cellules comprenant un premier groupe de cellules (G1) destiné à alimenter le moteur électrique et un deuxième groupe (G2) d'au moins une cellule distincte de celles du premier groupe (G1), destiné à alimenter le réseau de bord du véhicule, **caractérisé en ce que** le deuxième groupe (G2) délivre une tension d'alimentation adaptée au réseau de bord, sans convertisseur de tension intermédiaire, pour alimenter directement le réseau de bord du véhicule, le premier groupe de cellules (G1) délivrant à ses bornes (1A, 1B) une haute tension (+HT, -HT) relativement à la tension du réseau de bord (R2), les deux groupes (G1, G2) étant isolés électriquement l'un de l'autre, et formant deux batteries distinctes, lorsque lesdits groupes alimentent respectivement ledit moteur électrique et ledit réseau de bord dᵤ véhicule et les groupes de cellules connectés en série via un relais (5) pour recharger simultanément les deux groupes de cellules.

2. Pack batterie selon la revendication précédente, **caractérisé en ce que** le deuxième groupe (G2) d'au moins une cellule est relié au premier groupe de cellules (G1) par l'intermédiaire d'un convertisseur de tension sécuritaire (13), le deuxième groupe d'au moins une cellule étant destiné à être rechargé par le premier groupe de cellules par l'intermédiaire du convertisseur.

3. Pack batterie selon la revendication précédente, **caractérisé en ce que** le convertisseur de tension (13) comporte deux bornes d'entrée (14A, 14B) connectées aux bornes (1A,1B) du premier groupe de cellules (G1), et deux bornes de sortie, l'une (15A) étant connectée à une borne (2A) du deuxième groupe de cellules (G2), l'autre (15B) étant connectée à la masse, de sorte à permettre la recharge de façon interne du deuxième groupe (G2) depuis le premier groupe (G1) lors d'une phase de stationnement ou lors d'une phase de roulage atypique lors de laquelle l'au moins une cellule du deuxième groupe (G2) se décharge plus rapidement que les cellules du premier groupe (G1).

4. Pack batterie selon l'une des revendications précédentes, **caractérisé en ce qu'**il comprend un premier relais (5) à deux états, ouvert et fermé, interposé entre les deux groupes de cellules (G1, G2), et un système de commande destiné à fermer le premier relais pour connecter en série les deux groupes de cellules et recharger simultanément les deux groupes de cellules (G1, G2).

5. Pack batterie selon la revendication précédente, **caractérisé en ce que**
• il comprend un deuxième relais (6) à deux états, ouvert et fermé, par l'intermédiaire duquel, à l'état fermé, une borne (1B) du premier groupe de cellules (G1) est destinée à être reliée directement à la masse ;
• le système de commande est destiné à ouvrir le premier relais (5) et à fermer le deuxième relais (6), après une recharge simultanée des deux groupes de cellules, une fois que les cellules du premier groupe (G1) ont atteint un seuil de charge prédéfini, de manière à poursuivre la recharge seulement de la ou des cellules du premier groupe (G1).

6. Equipement pour véhicule automobile ou hybride comportant le pack batterie selon l'une des revendications 1 à 5, **caractérisé en ce qu'**il comprend un chargeur double sortie (10), ayant une sortie (11A, 11B) reliée au premier groupe de cellules (G1) et une autre sortie (12A, 12B) reliée au deuxième groupe d'au moins une cellule (G2).

7. Equipement selon la revendication précédente, **caractérisé en ce que** les puissances des deux sorties du chargeur double sortie (10) sont respectivement proportionnelles aux nombres respectifs de cellules du groupe de cellules correspondant.

8. Equipement pour véhicule automobile ou hybride comportant le pack batterie selon l'une des revendications 4 et 5, **caractérisé en ce qu'**il comprend en outre un chargeur (7) relié à une borne de recharge (1A) du premier groupe de cellules (G1) et à la masse, le deuxième groupe d'au moins une cellule (G2) ayant une borne reliée à la masse.

9. Véhicule automobile électrique ou hybride, disposant d'un moteur électrique et d'un réseau de bord, **caractérisé en ce qu'**il comporte un pack batterie selon l'une des revendications 1 à 5, ou un équipement selon l'une des revendications 6 à 8.

10. Véhicule selon la revendication précédente, **caractérisé en ce qu'**il comprend un convertisseur de tension (16) interposé entre le pack batterie et le réseau de bord (R2) du véhicule.

## Patentansprüche

1. Batteriepack für ein mit einem elektrischen Traktionsmotor und einem elektrischen Bordnetz (R2) ausgestattetes Kraftfahrzeug, eine Anordnung von Zellen (C₁ bis C_{N}) aufweisend, wobei die Anordnung von Zellen eine erste Gruppe von Zellen (G1) umfasst, die dazu bestimmt ist, den Elektromotor zu speisen, und eine zweite Gruppe (G2) von wenigstens einer Zelle, die von denjenigen der ersten Gruppe (G1) verschieden ist, die dazu bestimmt ist, das Bordnetz des Fahrzeugs zu speisen, **dadurch gekennzeichnet, dass** die zweite Gruppe (G2) eine an das Bordnetz angepasste Speisespannung liefert, ohne Zwischenspannungswandler, um das Bordnetz des Fahrzeugs direkt zu speisen, wobei die erste Gruppe von Zellen (G1) an ihren Anschlüssen (1A, 1B) eine relativ zur Spannung des Bordnetzes (R2) hohe Spannung (+HT, -HT) liefert, wobei die zwei Gruppen (G1, G2) elektrisch voneinander isoliert sind und zwei separate Batterien bilden, wenn die Gruppen den Elektromotor bzw. das Bordnetz des Fahrzeugs speisen, und die Gruppen von Zellen über ein Relais (5) in Reihe geschaltet sind, um die zwei Gruppen von Zellen gleichzeitig aufzuladen.

2. Batteriepack nach dem vorhergehenden Anspruch, **dadurch gekennzeichnet, dass** die zweite Gruppe (G2) von wenigstens einer Zelle mit der ersten Gruppe von Zellen (G1) über einen Sicherheits-Spannungswandler (13) verbunden ist, wobei die zweite Gruppe von wenigstens einer Zelle dazu bestimmt ist, durch die erste Gruppe von Zellen über den Spannungswandler aufgeladen zu werden.

3. Batteriepack nach dem vorhergehenden Anspruch, **dadurch gekennzeichnet, dass** der Spannungswandler (13) zwei Eingangsanschlüsse (14A, 14B) aufweist, die mit den Anschlüssen (1A, 1B) der ersten Gruppe von Zellen (G1) verbunden sind, und zwei Ausgangsanschlüsse, wobei einer (15A) mit einem Anschluss (2A) der zweiten Gruppe von Zellen (G2) verbunden ist und der andere (15B) mit Masse verbunden ist, um das Aufladen der zweiten Gruppe (G2) intern von der ersten Gruppe (G1) aus während einer Parkphase oder während einer atypischen Fahrphase, in welcher sich die wenigstens eine Zelle der zweiten Gruppe (G2) schneller als die Zellen der ersten Gruppe (G1) entlädt, zu ermöglichen.

4. Batteriepack nach einem der vorhergehenden Ansprüche, **dadurch gekennzeichnet, dass** es ein erstes Relais (5) mit zwei Zuständen, offen und geschlossen, das zwischen den zwei Gruppen von Zellen (G1, G2) angeordnet ist, und ein Steuerungssystem, das dazu bestimmt ist, das erste Relais zu schließen, um die zwei Gruppen von Zellen in Reihe zu schalten und die zwei Gruppen von Zellen (G1, G2) gleichzeitig aufzuladen, umfasst.

5. Batteriepack nach dem vorhergehenden Anspruch, **dadurch gekennzeichnet, dass**
• es ein zweites Relais (6) mit zwei Zuständen, offen und geschlossen, umfasst, über welches, im geschlossenen Zustand, ein Anschluss (1B) der ersten Gruppe von Zellen (G1) bestimmt ist, direkt mit Masse verbunden zu werden;
• das Steuerungssystem dazu bestimmt ist, nach einem gleichzeitigen Aufladen der zwei Gruppen von Zellen das erste Relais (5) zu öffnen und das zweite Relais (6) zu schließen, nachdem die Zellen der ersten Gruppe (G1) einen vordefinierten Ladungsschwellenwert erreicht haben, um so nur das Aufladen der Zelle oder der Zellen der ersten Gruppe (G1) fortzusetzen.

6. Einrichtung für ein Kraftfahrzeug oder Hybridfahrzeug, welche das Batteriepack nach einem der Ansprüche 1 bis 5 aufweist, **dadurch gekennzeichnet, dass** sie ein Ladegerät mit zwei Ausgängen (10) umfasst, das einen Ausgang (11A, 11B), der mit der ersten Gruppe von Zellen (G1) verbunden ist, und einen weiteren Ausgang (12A, 12B), der mit der zweiten Gruppe von wenigstens einer Zelle (G2) verbunden ist, aufweist.

7. Einrichtung nach dem vorhergehenden Anspruch, **dadurch gekennzeichnet, dass** die Leistungen der zwei Ausgänge des Ladegeräts mit zwei Ausgängen (10) jeweils proportional zu den jeweiligen Anzahlen von Zellen der entsprechenden Gruppe von Zellen sind.

8. Einrichtung für ein Kraftfahrzeug oder Hybridfahrzeug, welche das Batteriepack nach einem der Ansprüche 4 und 5 aufweist, **dadurch gekennzeichnet, dass** sie außerdem ein Ladegerät (7) umfasst, das mit einem Ladeanschluss (1A) der ersten Gruppe von Zellen (G1) und mit Masse verbunden ist, wobei die zweite Gruppe von wenigstens einer Zelle (G2) einen Anschluss aufweist, der mit Masse verbunden ist.

9. Elektrokraftfahrzeug oder Hybridfahrzeug, das über einen Elektromotor und ein Bordnetz verfügt, **dadurch gekennzeichnet, dass** es ein Batteriepack nach einem der Ansprüche 1 bis 5 oder eine Einrichtung nach einem der Ansprüche 6 bis 8 aufweist.

10. Fahrzeug nach dem vorhergehenden Anspruch, **dadurch gekennzeichnet, dass** es einen Spannungswandler (16) umfasst, der zwischen dem Batteriepack und dem Bordnetz (R2) des Fahrzeugs angeordnet ist.

## Claims

1. Battery pack for a motor vehicle fitted with an electric traction motor and an electrical on-board network (R2), including a set of cells (C₁ to C_{N}), said set of cells comprising a first group of cells (G1) for supplying the electric motor with power and a second group (G2) of at least one cell that is distinct from those of the first group (G1), for supplying the on-board network of the vehicle with power, **characterized in that** the second group (G2) delivers a supply voltage suitable for the on-board network, without intermediate voltage converter, in order to supply the on-board network of the vehicle with power directly, the first group of cells (G1) delivering, to its terminals (1A, 1B), a high voltage (+HT, -HT) relative to the voltage of the on-board network (R2), the two groups (G1, G2) being electrically isolated from one another, and forming two distinct batteries, when said groups supply power to, respectively, said electric motor and said on-board network of the vehicle and the cell groups connected in series via a relay (5) in order to charge the two groups of cells simultaneously.

2. Battery pack according to the preceding claim, **characterized in that** the second group (G2) of at least one cell is connected to the first group of cells (G1) via a safety voltage converter (13), the second group of at least one cell being intended to be charged by the first group of cells via the converter.

3. Battery pack according to the preceding claim, **characterized in that** the voltage converter (13) includes two input terminals (14A, 14B) connected to the terminals (1A, 1B) of the first group of cells (G1), and two output terminals, one (15A) being connected to a terminal (2A) of the second group of cells (G2), the other (15B) being connected to ground, so as to allow the second group (G2) to be charged internally from the first group (G1) in a parking phase or in an atypical driving phase in which the at least one cell of the second group (G2) is discharged faster than the cells of the first group (G1).

4. Battery pack according to one of the preceding claims, **characterized in that** it comprises a first relay (5) with two states, open and closed, interposed between the two groups of cells (G1, G2), and a control system for closing the first relay in order to connect the two groups of cells in series and to charge the two groups of cells (G1, G2) simultaneously.

5. Battery pack according to the preceding claim, **characterized in that**
• it comprises a second relay (6) with two states, open and closed, via which, in the closed state, a terminal (1B) of the first group of cells (G1) is intended to be connected directly to ground;
• the control system is intended to open the first relay (5) and to close the second relay (6), after the simultaneous charging of both groups of cells, once the cells of the first group (G1) have reached a predefined charge threshold, so as to continue charging only the one or more cells of the first group (G1).

6. Apparatus for hybrid or motor vehicle including the battery pack according to one of Claims 1 to 5, **characterized in that** it comprises a dual-output charger (10), having one output (11A, 11B) connected to the first group of cells (G1) and another output (12A, 12B) connected to the second group of at least one cell (G2).

7. Apparatus according to the preceding claim, **characterized in that** the powers of the two outputs of the dual-output charger (10) are respectively proportional to the respective numbers of cells of the corresponding group of cells.

8. Apparatus for hybrid or motor vehicle including the battery pack according to one of Claims 4 and 5, **characterized in that** it further comprises a charger (7) connected to a charging terminal (1A) of the first group of cells (G1) and to ground, the second group of at least one cell (G2) having a terminal connected to ground.

9. Hybrid or electric motor vehicle, having an electric motor and an on-board network, **characterized in that** it includes a battery pack according to one of Claims 1 to 5, or an apparatus according to one of Claims 6 to 8.

10. Vehicle according to the preceding claim, **characterized in that** it comprises a voltage converter (16) interposed between the battery pack and the on-board network (R2) of the vehicle.
